Europäisches Patentamt

European Patent Office

Office européen des brevets

(19)

(11) Veröffentlichungsnummer: **0 391 412**

**A1**

(12) # EUROPÄISCHE PATENTANMELDUNG

(21) Anmeldenummer: **90106534.2**

(22) Anmeldetag: **05.04.90**

(51) Int. Cl.⁵: **H01B 11/18, H01B 3/00**

Die Bezeichnung der Erfindung wurde geändert (Richtlinien für die Prüfung im EPA, A-III, 7.3).

(30) Priorität: **05.04.89 DE 3911041**

(43) Veröffentlichungstag der Anmeldung:
**10.10.90 Patentblatt 90/41**

(84) Benannte Vertragsstaaten:
**AT BE CH DE DK ES FR GB GR IT LI LU NL SE**

(71) Anmelder: **W.L. Gore & Associates GmbH**
**Hermann-Oberth-Strasse 22**
**D-8011 Putzbrunn(DE)**

(72) Erfinder: **Pröckl, Peter**
**Rehenbühlstrasse 43**
**D-8821 Pfofeld(DE)**
Erfinder: **Brückner, Ewald**
**Dormitzerstrasse 2**
**D-8501 Eckental(DE)**

(74) Vertreter: **Klunker . Schmitt-Nilson . Hirsch**
**Winzererstrasse 106**
**D-8000 München 40(DE)**

(54) **Isoliermaterial für Hochfrequenzleitungen.**

(57) Isoliermaterial für Hochfrequenzleitungen, insbesondere für Koaxial- und/oder Twinaxialleitungen, wobei das Isoliermaterial eine Kunststoffolie und eine darauf aufgebrachte Beschichtung enthält, die eine niedrige Dielektrizitätskonstante aufweist. Das Isoliermaterial wird hergestellt, indem Mikro-Hohlkugeln mit einem Klebstoff vermischt werden, und indem diese Mischung als Beschichtung auf die Kunststoffolie aufgebracht wird. Das so erhaltene Isoliermaterial ist flexibel, temperatur- und strahlenbeständig, und die damit versehenen Leitungen weisen ausgezeichnete elektrische Übertragungseigenschaften und ein sehr gutes Biegewechselverhalten auf. Beispielsweise ist eine beschichtete Polyimidfolie bis 400° C stabil und bis 1G rad strahlenbeständig.

EP 0 391 412 A1

## Isolationsmaterial für Hochfrequenzleitungen

Die Erfindung betrifft ein temperaturbeständiges und strahlenfestes Isolationsmaterial für Hochfrequenzleitungen für kerntechnische Anwendungen sowie ein Verfahren zu dessen Herstellung.

Hochfrequenzleitungen sind beispielsweise sogenannte Koaxialleitungen oder Twinaxialleitungen. Die Koaxialleitungen enthalten einen Innenleiter, der von einem Isolationsmaterial bzw. Dielektrikum umgeben ist, über das ein Außenleiter angeordnet ist. Twinaxialleitungen enthalten zwei axial angeordnete, miteinander verdrillte Leiter, die von einem Isolationsmaterial umgeben sind.

Derartige Koaxial- oder Twinaxialleitungen werden immer häufiger in der Kernforschung zur Übertragung hochfrequenter Signale eingesetzt. Bedingt durch die strahlenbelastete und auch heiße Umgebung in den Kernforschungsanlagen ist es erforderlich, daß auch die verwendeten Leitungen mit temperaturbeständigen und strahlenbeständigem Material ausgerüstet sind, ohne daß sie hinsichtlich ihrer Flexibilität und/oder hinsichtlich ihrer elektrischen Übertragungseigenschaften nachteilig beeinflußt werden.

Als Materialien für das Dielektrikum kommen u.a. Glasseide bzw. Glasseidengeflechte oder auch Kunststofffolien in Betracht. Die Glasseide wird auf den zu isolierenden Leiter gewickelt oder um diesen herum geflochten. Die Glasseide ist zwar hinsichtlich ihrer elektrischen Eigenschaften ein ausgezeichnetes Dielektrikum, jedoch ist es mechanisch labil. Darüber hinaus kann Glasseide nicht mit einer einheitlichen Dicke auf den zu isolierenden Leiter aufgebracht werden, wodurch Schwankungen der Dielektrizitätskonstante des Isolationsmaterials hervorgerufen werden. Derartige Schwankungen beeinflußen die Impe danz, die durch die Dielektrizitätskonstante des Isolationsmaterials bestimmt wird. Dies wiederum wirkt sich nachteilig auf die Übertragung von Hochfrequenzsignalen aus. So können beispielsweise Signale oder Impulse hervorgerufen werden, die sich bei der Übertragung von gewünschten Signalen durch die verwendeten Leitungen als störend erweisen. Die Dielektrizitätskonstante von Glasseide als Isolationsmaterial schwankt ebenfalls sehr stark, wenn der damit isolierte Leiter gebogen wird, da sich beispielsweise ein Glasseidengeflecht in sich bewegen kann, wodurch unterschiedliche Dicken bei dem Isolationsmaterial hervorgerufen werden.

Es ist weiter bekannt, Kunststoffolien als Dielektrikum zu verwenden. Dies führt zwar in Abhängigkeit von der verwendeten Kunststoffolie zur Strahlenbeständigkeit der damit isolierten Leitung, und diese Leitungen weisen ebenfalls eine hohe Temperaturbeständigkeit auf. Nachteilig bei der Verwendung von Kunststoffolien als Isolationsmaterial für Hochfrequenzleitungen ist jedoch, daß viele Kunststofffolien eine hohe Dielektrizitätskonstante aufweisen, wodurch die Kapazität zwischen den durch diese Kunststoffolie isolierten Leitern erhöht wird, was sich nachteilig auf die Übertragung der Signale auswirkt.

Der Erfindung liegt daher die Aufgabe zugrunde, ein Isolationsmaterial mit niedriger Dielektrizitätskonstante sowie ein Verfahren zu dessen Herstellung anzugeben, wobei das Isolationsmaterial flexibel, strahlungsbeständig und temperaturbeständig sein soll. Außerdem sollen die mechanischen und elektrischen Eigenschaften des Isolationsmaterials auch bei Biegungen und Bewegungen der Hochfrequenzleitungen, die dieses Isolationsma terial enthalten, aufrechterhalten bleiben.

Lösungen dieser Aufgabe sind in den Ansprüchen 1 und 11 angegeben und können den weiteren Ansprüchen gemäß vorteilhaft weitergebildet werden.

Das erfindungsgemäße Isolationsmaterial enthält eine beschichtete Folie, wobei die Beschichtung eine niedrige Dielektrizitätskonstante aufweist, so daß die Dielektrizitätskonstante des gesamten resultierenden Isolationsmaterials im Vergleich zur reinen Kunststoffolie erniedrigt wird.

Die erfindungsgemäß beschichtete Folien zeichnet sich je nach verwendeter Kunststoffolie durch eine hohe Temperaturbeständigkeit und Strahlenbeständigkeit aus. Beispielsweise liegt bei Verwendung einer Polyimidfolie eine Temperaturbeständigkeit bis zu 400° C und eine Strahlenbeständigkeit bis 1G rad vor. Die Leitungen, die diese beschichtete Folie enthalten, weisen ausgezeichnete elektrische Übertragungseigenschaften auf, haben ein sehr gutes Biegewechselverhalten und sind hochflexibel.

Das Dielektrikum kann im Gegensatz zum herkömmlich verwendeten Glasseidengeflecht definiert aufgebracht und vorausberechnet werden. Es ist möglich, mit der erfindungsgemäßen Folie eine einheitliche Dicke herzustellen, und somit resultieren keine Schwankungen mehr hinsichtlich der Dielektrizitätskonstanten, Impedanz und Kapazität. Die Hochfrequenzsignale können somit störungsfrei und ohne Probleme übertragen werden.

Mit Leitungen, die diese beschichtete Folie als Isolationsmaterial enthalten, ist es beispielsweise möglich, Kameras in radioaktiv belasteter und/oder heißer Umgebung zu betreiben. Ebenfalls können Sensoren oder Meßgeräte, die mit Hochfrequenz betrieben werden oder Hochfrequenz erzeugen, besonders in der Kernforschung eingesetzt werden.

Durch die Verwendung einer geeigneten Kunststofffolie als Trägermaterial bleibt deren Strahlenbeständigkeit und Temperaturbeständigkeit erhalten, durch eine geeignete Beschichtung wird die Dielektrizitätskonstante des daraus resultierenden Isolationsmaterials verkleinert. Beispielsweise wird die Dielektrizitätskonstante einer 0,025 mm dicken Polyimidfolie, die eine Dielektrizitätskonstante von 3,5 aufweist, durch eine geeignete Beschichtung auf etwa 2,0 bis 1,7 verkleinert. Die Verwendung einer Kunststoffolie hat den Vorteil, daß sehr dünne, flexible Isolationsmaterialien hergestellt werden können. Die beschichteten Kunststoffolien sind stabil, so daß auch durch Biegungen der Leitungen, die diese Kunststoffolien enthalten, keine Beeinträchtigungen hinsichtlich der mechanischen und der elektrischen Eigenschaften hervorgerufen werden.

Als Kunststoffolie kann jedes geeignete Kunststoffmaterial verwendet werden, das strahlen- und/oder temperaturbeständig ist. Vorzugsweise werden die Kunststoffolien aus Polyimid, aromatischem Polyimid, Polyetherimid, Polysulfon, Polyethersulfon, Polyethylenterephtalat, Polytetrafluorethylen (PTFE), Poly(tetrafluorethylen-co-hexafluorpropylen) (FEP), Perfluoralkoxy (PFA) oder Polyvinylidenfluorid (PVDF) oder aus Siliconkautschuk, Polyether-Poly urethan oder Polyester-Polyurethan hergestellt. Die bevorzugte Dicke der verwendeten Folien liegt je nach gewünschter Dimensionierung der zu isolierenden Leitungen im Bereich von etwa 12-25 $\mu$m.

Das erfindungsgemäße Beschichtungsmaterial enthält vorzugsweise Mikro-Hohlkugeln, die aus Silikaten oder Siliziumdioxid bzw. Quarz bestehen. Als Silikate eignen sich besonders Aluminiumsilikate oder Kalium-Natrium-Silikate. Die Hohlkugeln sollen einen Durchmesser im Bereich von etwa 5 $\mu$m bis 100 $\mu$m und vorzugsweise von etwa 10 $\mu$m bis 20 $\mu$m aufweisen, da dann eine homogene Beschichtung möglich ist.

Damit eine gute Haftung dieser Beschichtung auf der Kunststoffolie erzielt wird, ist es bevorzugt, zunächst die Mikro-Hohlkugeln mit einem Klebstoff zu vermischen, wobei der Gehalt an Mikro-Hohlkugeln in der Mischung bis ungefähr 50 Vol.-%, bezogen auf den Gehalt an Klebstoff, ausmachen soll. Anschließend wird diese Mischung auf das Trägermaterial, die Kunststoffolie, aufgebracht, wodurch das erfindungsgemäße Isolationsmaterial mit der niedrigen Dielektrizitätskonstante erhalten wird. Liegt der Anteil an Mikro-Hohlkugeln oberhalb von 50 Vol.-%, so verringert sich mit zunehmenden Gehalt an Mikro-Hohlkugeln die Klebstoffwirkung, so daß dadurch die Haftung auf der Kunststofffolie beeinträchtigt wird.

Bevorzugt wird eine Grundmatrix aus einem aromatischen Polyimid oder Siliconkautschuk oder Polyetherpolyurethan oder Polyesterpolyurethan oder Polyestersulfon. Als Haftvermittler für die Mikro-Hohlkugeln können Silanadditive auf der Basis von Thiocyanatopropyltriethoxysilan oder Vinyltrismethoxyethoxysilan zugesetzt werden. Auch Glanzadditive auf Siliconbasis können zugegeben werden.

Das erfindungsgemäße Isolationsmaterial wird nach seiner Herstellung in einzelne Bänder geschnitten, die dann beispielsweise zur Herstellung einer Koaxialleitung spiralförmig um den Innenleiter gewickelt werden. Dabei ist zu beachten, daß die Bänder mit einer relativ großen Überlappung um den Innenleiter gewickelt werden, damit eine perfekte Isolierung hergestellt wird und die Gefahr eines Kurzschlusses zwischen Innen- und Außenleiter wirksam verhindert wird.

. Je nachdem, welche Dimensionen die jeweiligen Leitungen aufweisen sollen, können auch mehrere Lagen dieser Isolationsmaterial-Bänder übereinander gewickelt werden. In diesem Fall ist es vorzuziehen, die verschiedenen Lagen abwechselnd mit einer Links-und einer Rechtsdrehung um den Innenleiter zu wickeln.

Als Kunststoffolie ist die Polyimidfolie besonders geeignet. Wird diese beispielsweise als Trägermaterial mit einer Dicke im Bereich von 12-25 $\mu$m verwendet, und werden darauf Mikro-Hohlkugeln mit einem Durchmesser von 10-20 $\mu$m zusammen mit einem geeigneten Klebstoff aufgebracht, so ist das daraus resultierende Isolationsmaterial bis zu einer Temperatur von etwa 400° C stabil.

Je nach Wunsch kann das erfindungsgemäße Isolationsmaterial aus der beschichteten Kunststoffolie auch mit verschiedenen Pigmenten versehen sein, die dem Isolationsmaterial eine bestimmte Farbe verleihen. Ebenso ist es möglich, ein Additiv hinzuzugeben, das den Glanz des resultierenden Isolationsmaterials erhöht. Ein derartiges Glanzmittel ist beispielsweise eine Verbindung auf Siliconbasis.

## Ansprüche

1. Temperaturbeständiges und strahlenfestes Isolationsmaterial für Hochfrequenzleitungen für kerntechnische Anwendungen, das eine Kunststoffolie enthält, dadurch gekennzeichnet, daß die Kunststoffolie aus einem Material hergestellt ist, das aus der Gruppe Polyimid, Polyetherimid, Polysulfon, Polyethersulfon oder Siliconkautschuk ausgewählt ist und daß die Folie eine Beschichtung mit niedriger Dielektrizitätskonstante aufweist.

2. Isolationsmaterial nach Anspruch 1, dadurch **gekennzeichnet**, daß die Beschichtung Mikro-Hohlkugeln enthält.

3. Isolationsmaterial nach Anspruch 2, dadurch **gekennzeichnet**, daß die Mikro-Hohlkugeln aus einem Material hergestellt sind, das aus der Gruppe Siliziumdioxid oder Silikat ausgewählt ist.

4. Isolationsmaterial nach Anspruch 2 oder 3, dadurch **gekennzeichnet**, daß die Mikro-Hohlkugeln Aluminiumsilikat oder Kalium-Natrium-Silikat enthalten.

5. Isolationsmaterial nach mindestens einem der Ansprüche 1-4, dadurch **gekennzeichnet**, daß die Beschichtung einen Klebstoff enthält.

6. Isolationsmaterial nach Anspruch 5, dadurch **gekennzeichnet**, daß der Klebstoff ein Silicon oder ein Silan-Additiv enthält.

7. Isolationsmaterial nach Anspruch 6, dadurch **gekennzeichnet**, daß das Silan-Additiv ein Thiocyanatopropyltriethoxysilan oder ein Vinyltrismethoxyethoxysilan ist.

8. Isolationsmaterial nach mindestens einem der Ansprüche 1-7, dadurch **gekennzeichnet**, daß in das Isolationsmaterial Farbpigmente eingebettet sind.

9. Isolationsmaterial nach mindestens einem der Ansprüche 1-8, dadurch **gekennzeichnet**, daß die Beschichtung zusätzlich ein Glanzmittel auf Siliconbasis enthält.

10. Verfahren zur Herstellung eines Isolationsmaterials für Hochfrequenzleitungen, das eine Kunststoffolie enthält, **gekennzeichnet** durch
- Vermischen von Mikro-Hohlkugeln mit einem Klebstoff; und
- Aufbringen dieser Mischung auf die Kunststoffolie.

11. Verfahren nach Anspruch 10, dadurch **gekennzeichnet**, daß bis zu etwa 50 Vol.-% an Mikro-Hohlkugeln, bezogen auf die Menge an Klebstoff, mit dem Klebstoff vermischt werden.

| | EINSCHLÄGIGE DOKUMENTE | | EP 90106534.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| Y | <u>CH - A - 523 597</u> (GUTEHOFFUNGSHÜTTE) * Gesamt * -- | 1-3, 10,11 | H 01 B 11/18 H 01 B 3/00 |
| Y | <u>GB - A - 1 578 355</u> (B.B.C.) * Seite 1, Zeilen 41-65 * ---- | 1-3, 10,11 | |

**RECHERCHIERTE SACHGEBIETE (Int Cl⁵)**

H 01 B
H 01 P 3/00
B 05 D 5/00
B 32 B

Der vorliegende Recherchenbericht wurde für alle Patentansprüche erstellt

| Recherchenort | Abschlußdatum der Recherche | Prüfer |
|---|---|---|
| WIEN | 22-06-1990 | KUTZELNIGG |